# EUROPÄISCHE PATENTANMELDUNG

(11) **EP 1 635 159 A2**
(43) Veröffentlichungstag der Anmeldung: **15.03.2006**
(21) Anmeldenummer: 05016270.0
(22) Anmeldetag: 27.07.2005
(51) Int. Cl.: G01M 1/04

(54) **Schnellspannvorrichtung mit Zentrierungsmittel zur Befestigung eines Fahrzeugrades auf der Welle einer Auswuchtmaschine**

(30) Priorität: 10.09.2004 DE 102004044287
(71) Anmelder: Warkotsch, Horst, 30938 Burgwedel (DE)
(72) Erfinder: Ohnesorge, Axel, 30938 Burgwedel (DE)
(74) Vertreter: Leine, Sigurd

(57) **Zusammenfassung**

Schnellspannvorrichtung mit Mittenzentrierung zur Befestigung eines Fahrzeugrades auf der Welle (2) einer Auswuchtmaschine. An der Welle (2) ist fest ein Flansch (44) zur reibschlüssigen Anlage der Felge (50) des Fahrzeugrades angeordnet. Zum Zentrieren dient eine Konusanordnung, die eine innere Bohrung zum Aufschieben auf die Welle (2) der Auswuchtmaschine und eine äußere Zentrierfläche zum Eingriff in das Zentrierloch der Felge des Fahrzeugrades aufweist. Die Konusanordnung weist einen Konus (20) auf, von dessen Spitze sich ein Rohrteil (22) erstreckt, das mit seiner Innenwandung axial verschieblich auf der Welle (2) oder einer Verlängerung davon angeordnet ist und auf dessen Außenwandung (28) sich die Spannmittel zum Festziehen der Felge gegen den Flansch abstützen. Der Vorteil dieser Schnellspannvorrichtung besteht darin, daß bis zum Erreichen der Zentrier- und Spannlage durch die Spannmittel keine Kräfte überwunden werden müssen. Das erleichtet die Handhabung.

## Beschreibung

Die Erfindung betrifft eine Schnellspannvorrichtung der im Oberbegriff des Anspruchs 1 genannten Art.

Durch DE 38 08 755 C2 ist eine Schnellspannvorrichtung der im Oberbegriff des Anspruchs 1 genannten Art bekannt. Bei dieser bekannten Vorrichtung wird die Konusanordnung durch eine axial wirkende Feder in das Zentrierloch der Felge des Fahrzeugrades gedrückt. Der Federweg ist dabei so bemessen, daß die Konusanordnung bei verschiedenen Durchmessern des Zentrierloches einer Felge mit seiner äußeren Zentrierfläche mit dem Zentrierloch der Felge in Eingriff kommt. Das hat zur Folge, daß beim Festziehen der Felge gegen den Flansch immer die Feder mehr oder weniger axial zusammengedrückt werden muß. Somit muß mit den Spannmitteln diese Federkraft überwunden werden. Das ist umständlich und insbesondere dann mühsam, wenn die Spannmittel durch eine Spannmutter gebildet sind, die auf einem Außengewinde der Welle von Hand aufgeschraubt wird. Dabei muß nicht nur die Kraft der Feder überwunden werden, vielmehr auch die Reibkraft, die durch die Feder in dem Gewinde entsteht.

Durch DE-OS 23 61 847 ist eine Vorrichtung zum Zentrieren ringförmiger Gegenstände um eine Spindel bekannt, die einen kegelstumpfförmigen Teil aufweist, der eine zentrale Bohrung zum Aufschieben des kegelstumpfförmigen Teils auf die Spindel aufweist und der mit radialen Schlitzen versehen ist. Das kegelstumpfförmige Teil weist an seinem axial sich verjüngenden Ende einen zylindrischen Fortsatz auf, auf dem ein topfförmiges Teil axial verschieblich angeordnet ist und zu dem kegelstumpfförmigen Teil hin eine flanschartige Anlagefläche zur Anlage an der Felge eines zu zentrierenden Gegenstandes aufweist. Am Ende der zylindrischen Verlängerung des kegelstumpfförmigen Teils befindet sich ein Gewinde, auf dem eine Spannmutter aufschraubbar ist, um so das topfförmige Teil in axialer Richtung gegen das kegelstumpfförmige Teil zu spannen. Zur Befestigung eines zu zentrierenden Gegenstandes muß zunächst das kegelstumpfförmige Teil nach Lösen der Spannmutter abgezogen und nach Aufbringen des zu zentrierenden Gegenstandes mit seinem zentralen Mittelloch auf das kegelstumpfförmige Teil wieder aufgeschoben werden, wonach dann das topfförmige Teil gegen das kegelstumpfförmige Teil gespannt und so das zentrale Mittelloch des zu zentrierenden Gegenstandes auf der Außenfläche des kegelstumpfförmigen Teils zentriert wird, wobei gleichzeitig das geschlitzte kegelstumpfförmige Teil aufgrund der Schlitze mit seiner Innenbohrung gegen die Spindel gespannt wird. Durch einen Spannvorgang wird also sowohl der zu zentrierende Gegenstand auf dem kegelstumpfförmigen Teil und dieses gleichzeitig auf der Spindel befestigt. Diese bekannte Vorrichtung ist in der Handhabung umständlich, da kegelstumpfförmiges und topfförmiges Teil zunächst getrennt und dann nach Aufschieben des zu zentrierenden Gegenstandes wieder aufgebracht werden muß, wonach dann das Spannen erfolgen muß. Ein weiterer Nachteil besteht darin, daß beim Aufspannen eines Fahrzeugrades der Anlagerand des topfförmigen Teiles auf der dem kegelstumpfförmigen Teil abgewandten Seite an der Felge des Fahrzeugrades zur Anlage kommt, mit der die Felge im fahrzeugmontierten Zustand nicht an dem Befestigungsflansch der Achse zur Anlage kommt. Eine dynamische Auswuchtung eines Fahrzeugrades ist daher unmöglich. Von entscheidendem Nachteil ist jedoch, daß nach dem Spannen die axiale Lage der Vorrichtung unbestimmt ist, so daß diese bekannte Vorrichtung zum Aufspannen eines Fahrzeugrades auf der Welle einer Auswuchtmaschine ungeeignet ist.

Durch DE 195 11 405 A1 ist eine Spannvorrichtung zum Aufspannen von Kraftfahrzeugrädern auf einer Welle einer Auswuchtmaschine bekannt, bei der die Konusanordnung durch eine axial wirkende Feder in das Zentrierloch der Felge des Fahrzeugrades gedrückt wird. Diese bekannte Vorrichtung hat daher die gleichen Nachteile wie die Vorrichtung nach der zuvor behandelten DE 38 08 755 C2.

Auch bei der Vorrichtung gemäß DE 42 00 380 A1 wird der Zentrierkonus durch Federwirkung in das Zentrierloch gedrückt. Das gleiche gilt für die Vorrichtung nach DE 28 13 387 A1.

Durch DE 36 05 821 A1 ist eine Schnellspannmutter zum Aufspannen der Felge eines Fahrzeugrades auf einem mit einem Außengewinde versehenen Ende einer Welle einer Auswuchtmaschine bekannt. Die Schnellspanneigenschaft wird dadurch erzielt, daß sich das Gewinde in zwei radial beweglichen Backen befindet, so daß das Gewinde durch radiale Bewegung dieser Backen in Eingriff und außer Eingriff gebracht werden kann. Einen zentrierenden Konus weist diese bekannte Schnellspannmutter nicht auf.

Der Erfindung liegt die Aufgabe zugrunde, eine Schnellspannvorrichtung der im Oberbegriff des Anspruchs 1 genannten Art zu schaffen, bei der die Nachteile der bekannten Schnellspannvorrichtung vermieden werden, insbesondere das Festziehen der Felge gegen den Flansch erleichtert ist.

Die der Erfindung zugrundeliegende Aufgabe wird durch die im Kennzeichen des Anspruchs 1 angegebene Lehre gelöst.

Der Grundgedanke dieser Lehre besteht darin, den Eingriff der Konusanordnung in das Zentrierloch der Felge eines Fahrzeugrades nicht mehr durch die Kraft einer Feder, sondern durch die beim Festziehen der Felge gegen den Flansch entstehenden Kräfte zu bewirken. Zu diesem Zwecke stützen sich erfindungsgemäß die Spannmittel zum Festziehen der Felge gegen den Flansch an einem Rohrteil ab, das mit der Konusanordnung verbunden und auf der Welle der Auswuchtmaschine axial verschieblich angeordnet ist. Die Kräfte der Spannmittel werden beim Festziehen auf die Konusanordnung übertragen und von dieser zentrierend auf die Innenwandung des Zentrierloches der Felge des Fahrzeugrades. Insgesamt müssen also mit den Spannmitteln nur die Kräfte zum Festziehen der Felge gegen den Flansch in der erforderlichen Stärke überwunden werden. Der Festziehweg ist somit denkbar gering und somit auch die zum Festziehen erforderliche Arbeit.

Die Außenwandung des Rohrteils weist zweckmäßigerweise ein Außengewinde auf, auf das eine Spannmutter, insbesondere eine Schnellspannmutter, aufschraubbar ist. Beim Aufschrauben der Spannmutter sind überhaupt keine Kräfte, abgesehen von geringfügigen Reibkräften im Gewinde, erforderlich. Das Zentrieren erfolgt somit praktisch ohne Kraftaufwendung, Kraft ist lediglich zum Festziehen der Felge gegen den Flansch erforderlich.

Aufgrund der Verschieblichkeit der Konusanordnung mit seinem sich von seiner Spitze erstreckenden Rohrteil kann die Konusanordnung unterschiedliche axiale Lagen einnehmen, bevor eine Felge mit ihrem Zentrierloch aufgesetzt und die Konusanordnung in das Zentrierloch gezogen ist. Sollen Räder mit gleichen Durchmessern der Zentrierlöcher aufgespannt werden, so hat die Konusanordnung in der Zentrierlage immer auch die gleiche axiale Lage. Aus diesem Grunde ist es vorteilhaft, gemäß einer Weiterbildung der Erfindung Einstellmittel vorzusehen, mit denen die axiale Lage der Konusanordnung einstellbar, also voreinstellbar ist in bezug auf die immer gleichen Durchmesser der Zentrierlöcher.

Gemäß einer Weiterbildung dieser Ausführungsform der Erfindung weisen die Einstellmittel eine Gewindestange auf, die sich innerhalb des rohrförmigen Teils erstreckt und sich mit ihrem einen Ende an der Welle der Auswuchtmaschine oder einem damit verbundenen Teil abstützt und in ein Gewinde eines Stützteils eingreift, das fest mit dem Rohrteil verbunden ist, wobei an einem axial aus dem Stützteil herausragenden Teil der Gewindestange ein Drehknopf angeordnet ist, der auch durch andersartige Mittel zum Drehen der Gewindestange ersetzt sein kann.

Vorteilhafterweise können die Einstellmittel auch durch Rastmittel gebildet sein, mit deren Hilfe die Konusanordnung in verschiedenen Verschiebelagen einrastbar ist. Die Rastmittel können verschiedenartig ausgebildet sein. Zweckmäßigerweise weisen sie eine in Radialrichtung federbelastete Kugel oder dergleichen an der Welle oder einem damit verbundenen Teil auf, wobei der Kugel oder dergleichen in dem rohrförmigen Teil Rastvertiefungen gegenüberliegen. Bei einer derartigen Ausbildung der Einstellmittel ist es möglich, nach Aufsetzen eines Fahrzeugrades das Rohrteil mit der Hand axial so weit vorzuziehen, daß die Konusanordnung zentrierend in das Zentrierloch der Felge des Fahrzeugrades eingreift. In dieser Stellung erfolgt dann ein Einrasten der Kugel in eine gegenüberliegende Vertiefung, so daß diese Lage der Konusanordnung auch für nachfolgende Aufspannvorgänge für Felgen mit gleichem Durchmesser des Zentrierloches aufrechterhalten bleibt. Die Konusanordnung kann beim Übergang auf Räder mit anderen Durchmessern von Zentrierlöchern ohne Schwierigkeiten mit der Hand in eine andere Rastlage und damit Zentrierlage gebracht werden.

Zweckmäßigerweise ist die Konusanordnung gegen Verdrehungen gegenüber der Welle oder einem daran befestigten Verlängerungsteil gesichert.

Die Konusanordnung kann in bekannter Weise ganz einfach durch einen Konus gebildet sein, der beim Zentriervorgang in das Zentrierloch einer Felge eines Fahrzeugrades bewegt wird und so mit seiner konischen Außenfläche die Zentrierung bewirkt. Besonders zweckmäßig ist jedoch eine Weiterbildung der Erfindung, bei der die Konusanordnung ein äußeres Zentrierteil mit einer zylindrischen Außenfläche zum Eingriff in das Zentrierloch des Fahrzeugrades und eine konische Innenfläche aufweist, in die der Konus der Konusanordnung mit seiner konischen Außenfläche eingreift, wobei das Zentrierteil durch voneinander getrennte, radial bewegliche Segmente gebildet ist. Die Zentrierung erfolgt also immer durch eine Bewegung zwischen den konischen Flächen des Konus und der Segmente des äußeren Zentrierteils, was den Vorteil hat, daß diese Flächen mit hoher Genauigkeit aufeinander gleiten. Die Lage der zylindrischen Außenfläche der Zentrierteile ist in bezug zu diesen konischen Flächen ebenfalls immer sehr genau, und aufgrund der zylindrischen Form erfolgt immer eine sichere zentrierte Anlage an dem Innenrand des Zentrierloches einer Felge.

Bei einer Weiterbildung dieser Ausführungsform der Erfindung weisen die Segmente sich radial erstreckende Führungsteile auf, die in sich radial in dem Flansch erstreckenden Führungen radial verschieblich gehalten sind. Die Führungsteile können beliebige Form haben, beispielsweise die von Stiften, die in radialen Bohrungen geführt sind. Bei einer zweckmäßigen Weiterbildung dieser Ausführungsform der Erfindung haben die Führungsteile die Form von radialen Flanschen, die in radialen Schlitzen geführt sind, die vorzugsweise in dem Flansch zur Anlage der Felge des Fahrzeugrades angeordnet sind. Die Segmente sind zweckmäßigerweise durch Federmittel in radialer Richtung nach innen vorgespannt, so daß immer eine spielfreie Anlage an dem Konus sichergestellt ist. Die Federmittel können zweckmäßigerweise durch einen Ring, vorzugsweise einen Gummiring gebildet sein, der in einer Umfangsnut der Segmente verläuft.

Anhand der Zeichnung soll die Erfindung an Ausführungsbeispielen näher erläutert werden.
- Fig. 1: zeigt ein erstes Ausführungsbeispiel der Erfindung im Schnitt,
- Fig. 2: zeigt das Ausführungsbeispiel gemäß Fig. 1 in Verbindung mit einer Spannmutter,
- Fig. 3: zeigt eine Abwandlung des Ausführungsbeispiels gemäß Fig. 1,
- Fig. 4: zeigt eine weitere Abwandlung der Ausführungsform gemäß Fig. 1 und
- Fig. 5: zeigt einen vergrößerten Ausschnitt aus Fig. 4.

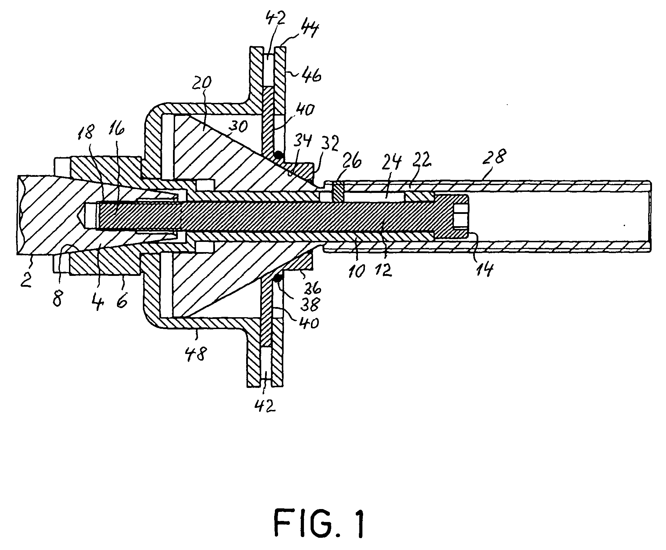

Fig. 1 zeigt ein Ende einer Welle 2 einer nicht dargestellten Auswuchtmaschine. Auf einem Konusteil 4 der Welle 2 sitzt ein Verlängerungsteil 6 mit einer komplementärkonischen Innenbohrung 8. Die Verlängerung des Verlängerungsteils 6 besteht im wesentlichen aus einem sich axial erstreckenden rohrförmigen Teil 10, in dem sich eine Schraube 12 erstreckt, die mit ihrem Kopf 14 an dem Ende des rohrförmigen Teils 10 anliegt und mit ihrem dem Kopf 14 abgewandten Gewindeende 16 in ein Innengewinde in dem Konusteil 4 eingeschraubt ist und so das Verlängerungsteil 6 auf dem Konusteil 4 fest hält.

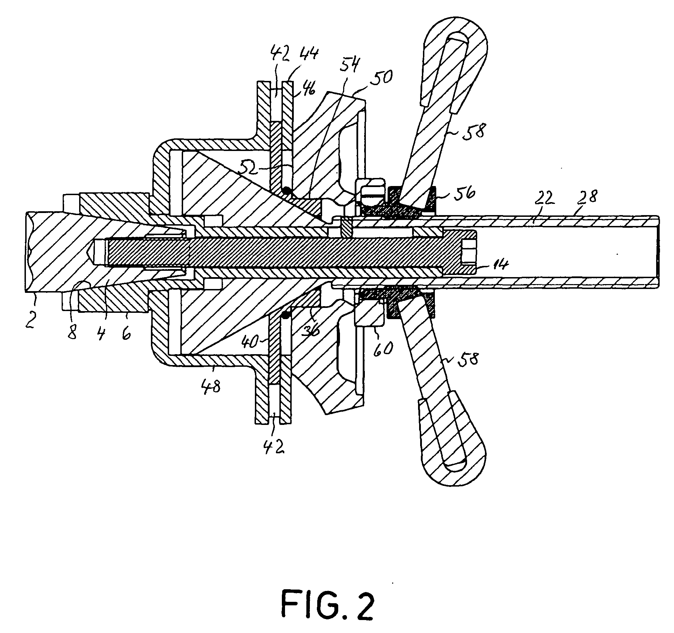

Auf dem rohrförmigen Teil 10 ist mit enger Passung ein Konus 20 axial verschieblich angeordnet. Von seiner Spitze erstreckt sich ein Rohrteil 22, das mit dem Konus 20 aus einem Stück besteht und ebenso wie der Konus 20 auf dem rohrförmigen Teil 10 verschieblich gehalten ist. In dem rohrförmigen Teil 10 erstreckt sich über eine begrenzte Länge eine Nut 24, in die ein in dem Rohrteil 22 sitzender Stift 26 verschieblich eingreift und so das Rohrteil 22 gegenüber dem rohrförmigen Teil 10 gegen Verdrehung sichert. Auf der Außenwandung des Rohrteils 22 befindet sich ein Außengewinde 28 zum Aufschrauben einer Spannschraube, wie das nachfolgend noch anhand der Fig. 2 erläutert wird.

An einer konischen Außenfläche 30 des Konus 20 liegen Segmente 32 mit komplementärkonischen Innenflächen an und bilden so ein äußeres Zentrierteil mit einer zylindrischen Außenfläche 36 zum zentrierenden Eingreifen in ein Zentrierloch einer Felge eines Fahrzeugrades. Ein Gummiring 38 hält die Segmente 32 mit ihren konischen Innenflächen 34 in Anlage an der konischen Außenfläche 30 des Konus 20. Alle Semente 32 weisen sich radial erstreckende Flanschteile 40 auf, die in radialen Schlitzen 42 eines Flansches 44 radial verschieblich geführt sind. Der Flansch 44 weist eine Anlagefläche für die Felge eines aufgespannten Fahrzeugrades auf und ist über einen Topf 48 mit dem Verlängerungsteil 6 und damit mit der Welle 2 verbunden.

Fig. 2 zeigt die Schnellspannvorrichtung gemäß Fig. 1 in gleicher Darstellung, jedoch ergänzt durch eine teilweise dargestellte Felge 50 eines Fahrzeugrades. Die Felge 50 liegt mit einer Fläche 52 an der Anlagefläche 46 des Flansches 44 an, während gleichzeitig die zylindrische Außenfläche 36 der Segmente 32 an einer Innenfläche 54 eines Zentrierloches der Felge 50 anliegt. Auf das Außengewinde 28 ist eine Spannmutter 56 mit Hilfe von Handgriffen 58 aufgeschraubt, derart, daß sie über einen Zwischenring 60 gegen die Felge 50 drückt. Die Druckkräfte bewirken, daß das Rohrteil 22 und damit auch der Konus 20 in der Zeichnung nach rechts gezogen wird, so daß die konische Außenfläche 30 die Segmente 32 radial nach außen drückt, so daß die zylindrische Außenfläche 36 der Segmente 32 zentrierend an der Innenfläche 54 der Felge 50 anliegt.

Beim Aufspannen der Felge 50 wird zunächst die Innenfläche 54 der Felge 50 des Fahrzeugrades auf die zylindrische Außenfläche 36 der Segmente 32 aufgesetzt, wobei die zylindrische Außenfläche 36 noch einen kleineren Durchmesser hat als die Innenfläche 54 des Zentrierloches der Felge 50 aufgrund der Kraft des Gummiringes 38. Danach wird die Spannmutter 56 aufgeschraubt, wobei praktisch keine Aufschraubkräfte erforderlich sind, bis der Zwischenring 60 der Spannmutter 56 gegen die Felge 50 stößt und diese mit ihrer Fläche 52 gegen die Anlagefläche 46 des Flansches 44 festzieht. Bei Verwendung einer Schnellspannmutter ist es möglich, diese nach dem Aufsetzen auf das Rohrteil 22 noch nicht mit ihrem Innengewinde mit dem Außengewinde 28 in Eingriff zu bringen, vielmehr kann zunächst das Rohrteil 22 mit der Hand in der Zeichnung nach rechts gezogen werden, um jedenfalls teilweise die Zentrierung zu bewirken, wonach dann die Schnellspannmutter mit ihrem Zwischenring 60 an der Felge 50 zur Anlage, ihr Innengewinde mit dem Außengewinde 28 in Eingriff gebracht und dann festgezogen wird.

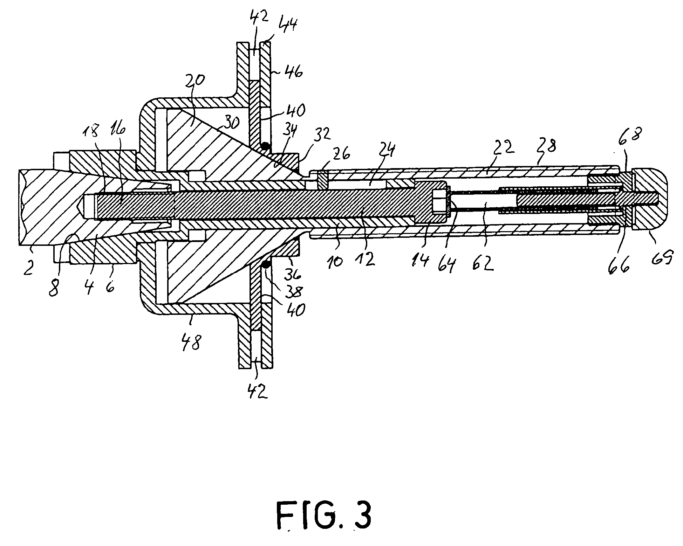

Fig. 3 zeigt eine Abwandlung der Ausführungsform gemäß Fig. 1. Gleiche Teile sind mit gleichen Bezugsziffern versehen. Der Unterschied besteht darin, daß eine Gewindestange 62 vorgesehen ist, die mit einem Ende 64 an dem Kopf 14 der Schraube 12 anliegt, während sie mit ihrem anderen Ende in ein Innengewinde 66 eines Stützteils 68 eingreift, das fest mit dem Rohrteil 22 verbunden ist. An einem axial aus dem Stützteil 68 herausragenden Ende der Gewindestange 62 befindet sich ein Drehknopf 69, mit dessen Hilfe die Gewindestange drehbar und so die Lage des Rohrteils 22 und damit des Konus 20 in axialer Richtung voreinstellbar ist, um so den Durchmesser der zylindrischen Außenfläche 36 der Segmente 32 in bezug zu gleichen Durchmessern von Zentrierlöchern von auzuwuchtenden Rädern voreinstellen zu können, um so den Weg der Spannmutter 56 kleinzuhalten.

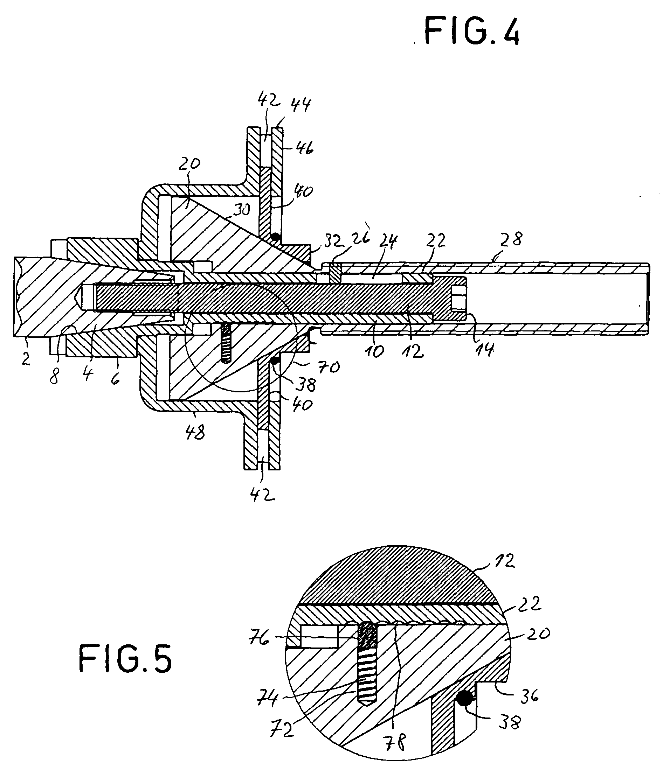

Fig. 4 zeigt eine weitere Abwandlung der Ausführungsform gemäß Fig. 1. Gleiche Teile sind mit gleichen Bezugsziffern versehen. Der Unterschied besteht darin, daß zur Voreinstellung des Rohrteils 22 und damit des Konus 20 Rastmittel vorgesehen sind, zu deren Verdeutlichung ein durch einen Kreis 70 gekennzeichneter Ausschnitt vergrößert in Fig. 5 gezeigt ist. Aus dieser Fig. 5 ist ersichtlich, daß sich in dem Konus 20 eine Sackbohrung 72 befindet, in der eine Wendelfeder 74 angeordnet ist, die einen Stift 76 mit seinem kugelförmigen Ende in entsprechende Rastvertiefungen 78 in dem Rohrteil 22 drückt. Durch Verschieben des Konus 20 kann das kugelförmige Ende des Stiftes 76 in unterschiedliche Rastvertiefungen 78 eingerastet und so der Konus 20 in unterschiedliche Schiebelagen eingerastet werden, um so den Durchmesser der zylindrischen Außenfläche 36 der Segmente 32 unterschiedlichen Durchmessern von Zentrierlöchern von Felgen anzupassen.

## Patentansprüche

1. Schnellspannvorrichtung mit Mittenzentrierung zur Befestigung eines Fahrzeugrades auf der Welle einer Auswuchtmaschine,
- mit einem auf der Welle fest angeordneten Flansch (44) zur reibschlüssigen Anlage der Felge (50) des Fahrzeugrades,
- mit Spannmitteln zum Festziehen der Felge (50) gegen den Flansch (44),
- mit einer Konusanordnung, die eine innere Bohrung zum Aufschieben auf die Welle der Auswuchtmaschine und eine äußere Zentrierfläche zum Eingriff in das Zentrierloch der Felge (50) des Fahrzeugrades aufweist,
**dadurch gekennzeichnet, daß** die Konusanordnung einen Konus (20) mit einem sich von seiner Spitze erstreckenden Rohrteil (22) aufweist, das mit seiner Innenwandung axial verschieblich auf der Welle oder einer Verlängerung davon angeordnet ist und auf dessen Außenwandung sich die Spannmittel zum Festziehen der Felge (50) gegen den Flansch abstützen.

2. Schnellspannvorrichtung nach Anspruch 1, **dadurch gekennzeichnet, daß** die Außenwandung des Rohrteils (22) ein Außengewinde (28) aufweist und daß die Spannmittel durch eine Spannmutter, insbesondere eine Schnellspannmutter, gebildet sind.

3. Schnellspannvorrichtung nach Anspruch 1, **dadurch gekennzeichnet, daß** Einstellmittel vorgesehen sind, mit denen die axiale Lage der Konusanordnung einstellbar ist.

4. Schnellspannvorrichtung nach Anspruch 3, **dadurch gekennzeichnet, daß** die Einstellmittel eine Gewindestange (62) aufweisen, die sich innerhalb des Rohrteils (22) erstreckt und sich mit ihrem einen Ende (64) an der Welle der Auswuchtmaschine oder einem damit verbundenen Teil abstützt und in ein Innengewinde (66) eines Stützteils (68) eingreift, das fest mit dem Rohrteil (22) verbunden ist, wobei an einem axial aus dem Stützteil (68) herausragenden Teil der Gewindestange (62) ein Drehknopf (69) angeordnet ist.

5. Schnellspannvorrichtung nach Anspruch 3, **dadurch gekennzeichnet, daß** die Einstellmittel durch Rastmittel gebildet sind, mit deren Hilfe die Konusanordnung in verschiedenen Verschiebelagen einrastbar ist.

6. Schnellspannvorrichtung nach Anspruch 5, **dadurch gekennzeichnet, daß** die Rastmittel eine in Radialrichtung federbelastete Kugel oder einen federbelasteten Stift (76) mit einem kugelförmigen Ende an der Welle oder einem damit verbundenen Teil aufweisen, wobei der Kugel oder dem kugelförmigen Ende des Stiftes (76) in dem rohrförmigen Teil Rastvertiefungen (78) gegenüberliegen.

7. Schnellspannvorrichtung nach Anspruch 1, **dadurch gekennzeichnet, daß** die Konusanordnung gegen Verdrehungen gegenüber der Welle oder einem daran befestigten Verlängerungsteil gesichert ist.

8. Schnellspannvorrichtung nach Anspruch 1, **dadurch gekennzeichnet, daß** die Konusanordnung ein äußeres Zentrierteil mit einer zylindrischen Außenfläche (36) zum Eingriff in das Zentrierloch des Fahrzeugrades und eine konische Innenfläche (34) aufweist, in die der Konus (20) der Konusanordnung mit seiner konischen Außenfläche (30) eingreift, wobei das Zentrierteil durch voneinander getrennte, radial bewegliche Segmente (32) gebildet ist.

9. Schnellspannvorrichtung nach Anspruch 8, **dadurch gekennzeichnet, daß** die Segmente (32) sich radial erstreckende Führungsteile aufweisen, die in sich radial in dem Flansch erstreckenden Führungen radial verschieblich gehalten sind.

10. Schnellspannvorrichtung nach Anspruch 9, **dadurch gekennzeichnet, daß** die Führungsteile die Form von radialen Flanschteilen (40) haben, die in radialen Schlitzen (42) geführt sind.

11. Schnellspannvorrichtung nach Anspruch 10, **dadurch gekennzeichnet, daß** die radialen Schlitze (42) in dem Flansch (44) zur Anlage der Felge (50) des Fahrzeugrades angeordnet sind.

12. Schnellspannvorrichtung nach Anspruch 8, **dadurch gekennzeichnet, daß** die Segmente (32) durch Federmittel in radialer Richtung nach innen vorgespannt sind.

13. Schnellspannvorrichtung nach Anspruch 12, **dadurch gekennzeichnet, daß** die Federmittel durch einen elastischen Ring, vorzugsweise einen Gummiring (38), gebildet sind, der in einer Umfangsnut der Segmente (32) verläuft.
